# EUROPEAN PATENT APPLICATION

(11) **EP 4 575 232 A1**
(43) Date of publication of application: **25.06.2025**
(21) Application number: 24219372.0
(22) Date of filing: 12.12.2024
(51) Int. Cl.: F04D 19/00, F04D 25/08, F04D 29/32, F04D 29/38, F04D 29/54, F04D 29/52

(54) **VEHICLE FAN INSTALLATION ASSEMBLY**

(30) Priority: 18.12.2023 US 202318543982
(71) Applicant: The Boeing Company, Arlington, VA 22202 (US)
(72) Inventor: JONES, Nicholas Alexander, Arlington, VA, 22202 (US); SARINAS, Eric Legaspi, Arlington, VA, 22202 (US); BLAKELY, Sydney, Arlington, VA, 22202 (US); AMELING, William Michael, Arlington, VA, 22202 (US)
(74) Representative: Hoffmann Eitle

(57) **Abstract**

A fan installation assembly (202) includes a conduit (204) and an axial fan assembly (100). The conduit is disposed onboard a vehicle (200) and configured to contain airflow (604) that is supplied to or received from an internal cabin (206) of the vehicle. The axial fan assembly is configured to propel the airflow through the conduit. The axial fan assembly includes a case (102), a motor assembly (106), and an impeller (104). The case surrounds the impeller and the motor assembly and is mounted to the conduit. The impeller includes a hub (110) and multiple blades (112) mounted on the hub. Each of the blades has a toroidal shape and forms a loop.

## Description

### FIELD OF THE DISCLOSURE

Embodiments of the present disclosure generally relate to a fan installation assembly for air distribution onboard a vehicle, such as an aircraft.

### BACKGROUND

Some vehicles include low-pressure axial fans that propel conditioned airflow throughout one or more internal cabins of the vehicles. The axial fans that are typically used in these vehicle air distribution applications generate a substantial amount of noise in the internal cabin. The typical axial fans have conventional airfoil blades, such as blades that resemble shark fins. The fan-generated noise may be a nuisance for both passengers and crew. For example, the frequency of the fan-generated noise may be within a range that is sensitive to human hearing. Furthermore, the fan-generated noise may combine with engine noise and other noise resulting in an excessive amount of cumulative noise in the internal cabin. The excessive cumulative noise may frustrate the ability of passengers and crew to reliably communicate, which hinders the ability to maintain a safe, operable, and comfortable space in the internal cabin.

### SUMMARY OF THE DISCLOSURE

A need exists for a vehicle fan installation assembly that propels conditioned airflow throughout one or more internal cabins of a vehicle that generates less noise and/or noise at a frequency that is less sensitive to human hearing than known low-pressure axial fan assemblies.

Certain embodiments of the present disclosure provide a fan installation assembly that includes a conduit and an axial fan assembly. The conduit is disposed onboard a vehicle and configured to contain airflow that is supplied to or received from an internal cabin of the vehicle. The axial fan assembly is configured to propel the airflow through the conduit. The axial fan assembly includes a case, a motor assembly, and an impeller. The case surrounds the impeller and the motor assembly and is mounted to the conduit. The impeller includes a hub and multiple blades mounted on the hub. Each of the blades has a toroidal shape and forms a loop.

Certain embodiments of the present disclosure provide an aircraft that includes an air distribution system. The air distribution system has a conduit and an axial fan assembly. The conduit is configured to contain airflow that is supplied to or received from an internal cabin of the aircraft. The axial fan assembly is configured to propel the airflow through the conduit. The axial fan assembly includes a motor assembly, an impeller, and a case. The impeller includes a hub and multiple blades mounted on the hub. Each of the blades has a toroidal shape that forms a loop. The case is mounted to the conduit and surrounds the impeller and the motor assembly.

Certain embodiments of the present disclosure provide a fan installation assembly that includes a conduit and an axial fan assembly. The conduit is disposed onboard a vehicle and configured to contain airflow that is supplied to or received from an internal cabin of the vehicle. The axial fan assembly is configured to propel the airflow through the conduit. The axial fan assembly includes a case, a motor assembly, and an impeller. The case defines a cavity that is fluidly connected to an internal volume of the conduit. The impeller and the motor assembly are disposed within the cavity. The impeller includes a hub and multiple blades mounted on the hub. Each of the blades has a toroidal shape and forms a loop. Each of the blades includes a first airfoil section mounted to the hub, a second airfoil section mounted to the hub, and a tip section that connects the first and second airfoil sections. The case defines an annular relief channel configured to receive captured flow of the airflow.

### BRIEF DESCRIPTION OF THE DRAWINGS

These and other features, aspects, and advantages of the present disclosure will become better understood when the following detailed description is read with reference to the accompanying drawings in which like numerals represent like parts throughout the drawings, wherein:
Figure 1 is a perspective view of an axial fan assembly according to an embodiment.
Figure 2 is a schematic block diagram of a vehicle that includes a fan installation assembly according to an embodiment.
Figure 3 is a front elevation view of an impeller of the axial fan assembly according to an embodiment.
Figure 4 is a perspective view of the impeller shown in Figure 3.
Figure 5 is a side view of the fan installation assembly according to an embodiment with the conduit and the case shown in cross-section.
Figure 6 is a side cross-sectional view of the fan installation assembly according to a second embodiment that includes a modified case.
Figure 7 is a perspective illustration of an aircraft.
Figure 8 is a perspective view of the impeller of the fan installation assembly according to another embodiment.
Figure 9 is a flow chart of a method of assembling a fan installation assembly according to an embodiment.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional elements not having that property.

Certain embodiments of the present disclosure provide a fan installation assembly. The fan installation assembly may be implemented on a vehicle, such an aircraft. The fan installation assembly is used to propel airflow through a conduit. The airflow that is propelled by the fan installation assembly may be supplied to or received from an internal cabin of the vehicle. For example, the airflow may be conditioned air that is supplied to the internal cabin for the comfort of passengers and/or crew in the internal cabin. The conduit may be part of an air distribution system onboard the vehicle. The fan installation assembly includes an axial fan assembly. The axial fan assembly may be mounted in or to the conduit to propel the airflow through the conduit.

The axial fan assembly includes an impeller that has a hub and multiple blades mounted on the hub. The blades of the axial fan assembly are toroidal blades. Each of the toroidal blades has a toroidal shape that forms a loop. For example, the toroidal blade has a body that has a first end and a second end connected to the hub. The body loops around along a length of the body from the first end to the second end. The body defines an opening laterally between a first airfoil section of the blade and a second airfoil section of the blade. The opening may radially extend from the hub to a tip section of the blade that connects the first and second airfoil sections. The toroidal blade may be twisted along the length of the body.

The fan installation assembly described herein includes an axial fan assembly with toroidal blades used to propel airflow through an air distribution system. The axial fan assembly may propel the airflow for supply to an internal cabin and/or return to an air conditioning system. The fan installation assembly may have several beneficial technical effects. The toroidal fan blade design shape may reduce the broadband noise generation relative to conventional low-pressure axial fans. For example, the toroidal blade design may reduce the broadband noise generation by reducing vortex shedding turbulence. The toroidal blades may shed the air off the blades more smoothly than conventional fin-like rotor blades, reducing the slip off the tip vortices. The reduced interior cabin noise may provide a benefit of improved comfort experienced by passengers and crew of a vehicle that implements the fan installation assembly. For example, the quieter cabin may be perceived as more enjoyable and may also enable more reliable communication between the passengers and the crew. Furthermore, the axial fan assembly described herein with toroidal blades may generate noise within a frequency range that is more acceptable to human hearing than conventional axial fans. For example, the axial fan assembly described herein may generate noise at a lower frequency than the conventional axial fans.

The toroidal fan blade design may provide efficiency gains over conventional axial fans as the toroidal blades may provide increased air velocity through the conduit. The increased efficiency of the axial fan assembly may permit several vehicle efficiency improvements. For example, the axial fan assembly may permit reduced power consumption, which conserves energy. In another example, the axial fan assembly may have a reduced size and/or weight relative to conventional axial fans, without a diminished output, which can conserve energy through weight savings and/or conserve space onboard the vehicle. Furthermore, various design aspects of the fan installation assembly may be adjusted to satisfy certain requirements, constraints, or user-defined goals, such as relating to noise, power consumption, pressure rise, flow velocity, and/or the like, while still maintaining broadband noise reduction relative to known low-pressure axial fans.

In one or more examples described herein, the fan installation assembly is installed in a vehicle. The vehicle that includes the fan installation assembly may be an aircraft. In an example, the aircraft may be a commercial passenger aircraft. The fan installation assembly may also be implemented in other types of aircraft and even non-aircraft vehicles. Other types of aircraft may include electric aircraft, autonomous aircraft, and/or the like. Other suitable types of vehicles for the fan installation assembly may include rail vehicles (e.g., locomotives), automobiles, trucks, buses, mining vehicles, agricultural vehicles, and the like. Furthermore, the fan installation assembly described herein may be installed in stationary buildings. For example, the fan installation assembly may be part of a heating, ventilation, and air conditioning (HVAC) system for the building.

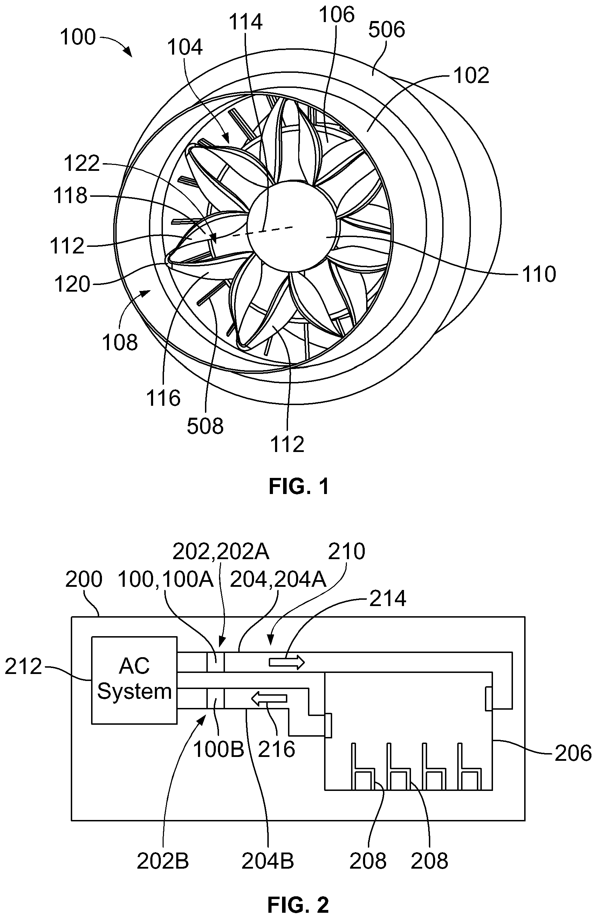

Referring now to the drawings, Figure 1 is a perspective view of an axial fan assembly 100 according to an embodiment. The axial fan assembly 100 includes a case 102, an impeller 104, and a motor assembly 106. The case 102 surrounds the impeller 104 and the motor assembly 106. For example, the case 102 defines a cavity 108 for containing and guiding airflow through the case 102. The impeller 104 and the motor assembly 106 may be located within the cavity 108, exposed to the airflow. The case 102 also provides safety and reduces the risk of damage to the impeller 104 by blocking external objects from contacting the impeller 104 during operation. The impeller 104 includes a hub 110 and multiple blades 112 mounted on the hub 110. The blades 112 are circumferentially spaced apart along a perimeter of the hub 110. The impeller 104 (e.g., the hub 110 and the blades 112) are designed to rotate about a hub axis 114 that extends through a center of the hub 110. The impeller 104 has seven blades 112 in the illustrated example, but may have more than seven blades 112 or less than seven blades 112 in another example. The blades 112 may be evenly spaced around the perimeter of the hub 110 for uniform airflow propulsion.

The blades 112 have a toroidal shape and form respective loops extending from the hub 110. For example, each blade 112 has a first airfoil section 116 mounted to the hub 110, a second airfoil section 118 mounted to the hub 110, and a tip section 120 that connects the first and second airfoil sections 116, 118. The tip section 120 forms a distal end of the blade 112 farthest from the hub 110. The blade 112 is looped such that the first airfoil section 116, the tip section 120, and the second airfoil section 118 define an opening 122 through a thickness of the blade 112. The opening 122 may be radially elongated, extending from the hub 110 to the tip section 120. The loop may be a closed loop. For example, the opening may be enclosed laterally between the first and second airfoil sections 116, 118 and radially between the hub 110 and the tip section 120.

The toroidal shape of the blades 112 may generate significantly less noise than axial fans with conventional rotors (e.g., fin or blade-shaped rotors), at least at audible frequency ranges that are perceptible to humans. For example, the axial fan assembly 100 may be significantly quieter than conventional axial fans between 20 Hz and 20 KHz. For example, the toroidal blade design may distribute vortices generated by the impeller 104 along the entire radial length of the blade 112, rather than just at the tip, which dampens the noise that is generated. The axial fan assembly 100 may generate comparable and/or increased fluid thrust relative to conventional propellers.

The impeller 104 is driven to rotate by the motor assembly 106 to propel airflow through the case 102. The impeller 104 may propel the airflow in a guided direction parallel to the hub axis 114 (e.g., along which the blades 112 rotate). The axial fan assembly 100 may be a low-pressure fan. For example, the axial fan assembly 100 may not compress air to a pressure level that can be used for generating thrust to propel the vehicle. In an example, the axial fan assembly 100 is used to cycle air throughout one or more internal cabins of a vehicle.

Figure 2 is a schematic block diagram of a vehicle 200 that includes a fan installation assembly 202 according to an embodiment. The vehicle 200 has two fan installation assemblies 202A, 202B in the illustrated example, but may have only one or three or more fan installation assemblies 202 in other examples. Each fan installation assembly 202 includes a conduit 204 disposed onboard the vehicle 200 and the axial fan assembly 100 as shown in Figure 1. The conduit 204 contains airflow that is supplied to or received from an internal cabin 206 of the vehicle 200. The internal cabin 206 in Figure 2 includes seats 208 for passengers and/or crew of the vehicle 200.

In an example, the fan installation assemblies 202A, 202B are incorporated into an air distribution system 210 onboard the vehicle 200. The air distribution system 210 cycles air between the internal cabin 206 and an air conditioning (AC) system 212. The AC system 212 modifies parameters of air, such as temperature and humidity, to generate conditioned airflow. The air distribution system 210 may direct and distribute the conditioned airflow from the AC system 212 to the internal cabin 206 and optionally other internal cabins onboard the vehicle 200. The air distribution system 210 may also collect airflow from the internal cabin 206 and optionally other internal cabins and return the collected airflow to the AC system 212. The AC system 212 may be a heating, ventilation, and air-conditioning (HVAC) system. For example, the AC system 212 may include a compressor, an expansion device, an evaporator, and a condenser, as well as coolant lines, air temperature sensors, air filters, and other associated components. In an example, the vehicle 200 is an aircraft, and the AC system 212 is part of an environmental control system onboard the aircraft. For example, the AC system 212 may be an AC pack on a commercial aircraft. The commercial aircraft may include multiple AC packs. For example, a first AC pack may be associated with a left side of the aircraft, and a second AC pack may be associated with a right side of the aircraft.

In an example, the conduit 204A of the first fan installation assembly 202A is an output conduit 204A that supplies conditioned airflow from the AC system 212 toward the internal cabin 206. The conduit 204B of the second fan installation assembly 202B may be a return conduit 204B that receives airflow from the internal cabin 206 and propels the airflow to the AC system 212. The conduits 204A, 204B may be enclosed air pathways, such as ducts. The first axial fan assembly 100A may propel the airflow through the output conduit 204A in a first guided direction 214 toward the internal cabin 206. The second axial fan assembly 100B may propel the airflow through the return conduit 204B in a second guided direction 216 toward the AC system 212. In an example, the axial fan assemblies 100A, 100B may be located within the corresponding conduits 204A, 204B. In another example, the axial fan assemblies 100A, 100B may be located at ends of the corresponding conduits 204A, 204B. In either example, the axial fan assemblies 100A, 100B are fluidly connected to the internal volumes of the conduits 204A, 204B to drive airflow through the conduits 204A, 204B. The axial fan assemblies 100A, 100B are ducted fans, such that the airflow propelled by the fans 100A, 100B is contained within the conduits 204A, 204B. Although the axial fan assemblies 100A, 100B are shown in the conduits 204A, 204B of the air distribution system 210 in the illustrated example, the axial fan assemblies 100A, 100B may be considered as components of the AC system 212. For example, the axial fan assemblies 100A, 100B may be fans that propel airflow over the evaporator and condenser coils of the AC system 212.

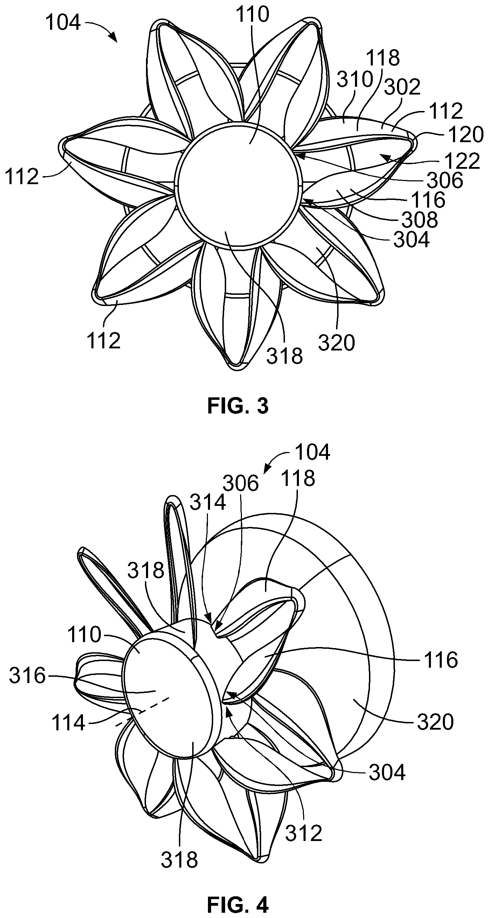

Figure 3 is a front elevation view of the impeller 104 of the axial fan assembly 100 according to an embodiment. Figure 4 is a perspective view of the impeller 104 shown in Figure 3. In the illustrated embodiment, each of the blades 112 has a toroidal shape that forms a loop. For example, each blade 112 has a body 302 that has a first end 304 and a second end 306. The blade 112 extends from the first end 304 to the second end 306. The first and second ends 304, 306 may be both connected to the hub 110. The body 302 loops around along a length of the body from the first end 304 to the second end 306. The first airfoil section 116 of the blade 112 extends from the first end 304 to the tip section 120. The second airfoil section 118 extends from the tip section 120 to the second end 306. The body 302 defines the opening 122 laterally between the first airfoil section 116 and the second airfoil section 118. The opening 122 may radially extend from the hub 110 to the tip section 120 of the blade 112.

The first airfoil section 116 may be an intake portion of the blade 112, and the second airfoil section 118 may be an exhaust portion of the blade 112. For example, as shown in Figure 4, the first airfoil section 116 may be upstream of at least most of the second airfoil section 118 along a guided direction of airflow through the case 102 (shown in Figure 1) and conduit 204 (Figure 2). The guided direction of airflow represents the direction that the axial fan assembly 100 propels the airflow through the case 102 and conduit 204, such as the first and second guided directions 214, 216 shown in Figure 2. The first airfoil section 116 of the blade 112 may generally pull the airflow into the opening 122 providing an intake function. The second airfoil section 118 may generally push the airflow downstream in the guided direction of airflow, providing an exhaust function. In an example, the first airfoil sections 116 (e.g., the first ends 304 of the body 302) connect to the hub 110 at respective first locations 312, and the second airfoil sections 118 (e.g., the second ends 306 of the body 302) connect to the hub 110 at respective second locations 314. The first and second locations 312, 314 are spaced apart along the hub axis 114 of the hub 110. For example, the first locations 312 may be between a tip 316 of the hub 110 and the second locations 314 along the hub axis 114. As such, the first locations 312 may be upstream of the second locations 314 with respect to the guided direction of airflow

The blades 112 may be twisted along the length of the respective bodies 302. For example, the blade 112 (e.g., the body 302 of the blade 112) has a first side 308 and a second side 310 that is opposite the first side 308. The first and second sides 308, 310 may be broad surfaces that extend between first and second lateral edges of the body 302. The blade 112 may be twisted such that the first side 308 of the blade 112 along the first airfoil section 116 faces in a different direction than the first side 308 of the blade 112 along the second airfoil section 118. For example, the first side 308 of the blade 112 along the first airfoil section 116 may generally face upstream according to the guided direction of the airflow through the case 102 and the conduit 204. The first side 308 of the blade 112 along the second airfoil section 118 may generally face downstream according to the guided direction of airflow.

In an example, the body 302 of the blade 112 may be a monolithic (e.g., one-piece) body. The body 302 being monolithic indicates that the different sections are integral and seamlessly connected to one another. For example, the blade 112 may not have any seams along the length of the body 302. The body 302 may be formed by shaping (e.g., molding, casting, laying up) a single structural build part into the twisted, toroidal shape shown in Figures 1, 3, and 4.

In an example, the hub 110 has a narrow portion 318 and a broad portion 320 extending from the narrow portion 318. The blades 112 are mounted to the narrow portion 318 of the hub 110. The motor assembly 106 (shown in Figure 1) is mounted to the broad portion 320. In an example, the narrow portion 318 of the hub 110 may have a cylindrical shape, and the broad portion 320 may have a conical shape. The conical shape gradually increases in diameter with increasing distance from the narrow portion 318. The internal volume within the cavity of the case 102, through which the airflow is propelled by the impeller 104, gradually decreases along the length of the conical, broad portion 320.

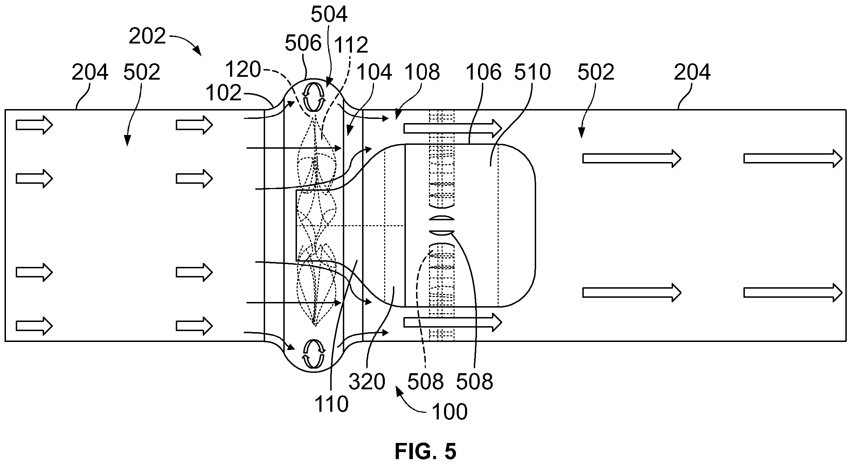

Figure 5 is a side view of the fan installation assembly 202 according to an embodiment with the conduit 204 and the case 102 shown in cross-section. The impeller 104 and the motor assembly 106 are disposed within the cavity 108 of the case 102. The cavity 108 is fluidly connected to an internal volume 502 of the conduit 204. The case 102 may be mechanically coupled to the conduit 204. For example, the case 102 may be affixed between two sections of the conduit 204 and/or disposed within the internal volume 502 of the conduit 204.

In an embodiment, the case 102 may define an annular relief channel 504 that is designed to receive captured flow of the airflow. For example, the case 102 may include a radial protrusion 506 (also shown in Figure 1) that defines the annular relief channel 504. The radial protrusion 506 is a section of the case 102 that bulges radially outward. The annular relief channel 504 has a greater diameter than portions of the case 102 next to the annular relief channel 504 (e.g., portions immediately upstream and downstream of the annular relief channel 504). The annular relief channel 504 may align with the blades 112 of the impeller 104. The tip sections 120 of the blades 112 may align with the annular relief channel along the hub axis 114 of the hub. For example, a plane through which the blades 112 rotate may intersect the annular relief channel 504.

The annular relief channel 504 may received captured flow of the airflow that is attributable to vortex shedding. The annular relief channel 504 may allow the turbulent blade tip flow (e.g., vortex shedding) to separate from core (e.g., primary) airflow through the axial fan assembly 100 and the conduit 204. Due to the annular relief channel 504, the captured flow shed off the tip sections 120 of the blades 112 may be located radially outward of the impeller 104 to avoid significant constraining (e.g., choking) of the core airflow. As a result, a greater air flow rate of the core airflow may be achieved with the annular relief channel 504 present than if the case 102 did not include the annular relief channel 504. The captured airflow is allowed to reintegrate with the core airflow downstream of the annular relief channel 504.

The blades 112 of the axial fan assembly 100 may be relatively long to enhance the interaction between the blades 112 and the air. In an example, the diameter of the impeller 104 is at least 75% of a first inner diameter of the case 102. The first inner diameter of the case 102 may be located at a segment of the case 102 next to the annular relief channel 504. In an example, the impeller diameter is not greater than the first inner diameter of the case 102. For example, the tip sections 120 of the blades 112 may not extend into the annular relief channel 504. As such, the annular relief channel 504 may receive the captured airflow without also receiving portions of the blades 112. In another example, the tip sections 120 of the blades 112 may extend at least slightly beyond the first inner diameter into the annular relief channel 504.

The fan installation assembly 202 may include straightening vanes 508 mounted to a housing 510 of the motor assembly 106. The housing 510 of the motor assembly 106 is connected to the broad portion 320 of the hub 110. The housing 510 may contain a motor that drives rotation of the blades 112 of the impeller 104. The housing 510 may also contain a power source that powers the motor. The straightening vanes 508 may be circumferentially spaced apart along a perimeter of the housing 510, as shown in Figure 1. The straightening vanes 508 control the direction of airflow through the cavity 108 of the case 102 downstream of the impeller 104. For example, straightening vanes may be positioned to straighten the core airflow by reducing the variation in airflow directions downstream of the impeller 104 and the annular relief channel 504.

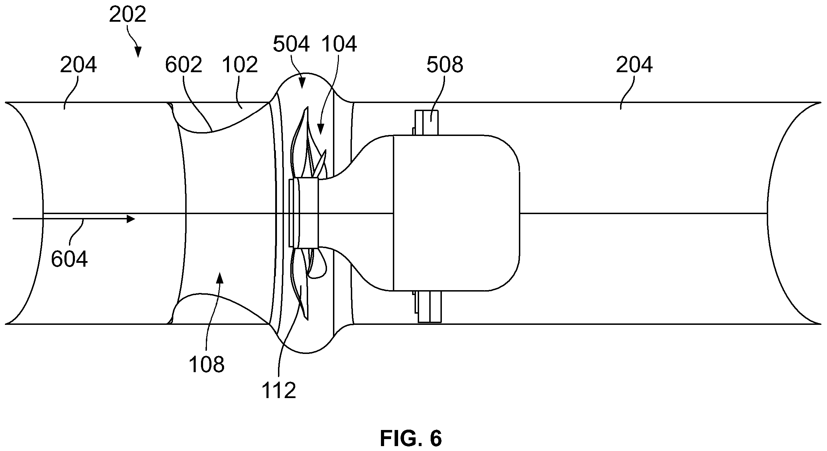

Figure 6 is a side cross-sectional view of the fan installation assembly 202 according to a second embodiment in which the case 102 is modified relative to the case 102 shown in Figures 1 and 3 through 5. In the illustrated embodiment, the fan installation assembly 202 may include a flow conditioner 602 within the case 102. The flow conditioner 602 may be located upstream of the impeller 104 according to a guided direction of airflow 604 through the conduit 204. For example, the flow conditioner 602 may be upstream of the blades 112 and the annular relief channel 504. The flow conditioner 602 may have an annular shape that protrudes into the cavity 108 of the case 102 to restrict flow by decreasing the diameter of the cavity 108. For example, the airflow entering the case 102 is constrained or choked by the flow conditioner 602, which increases the pressure and/or flow velocity of the airflow exiting the flow conditioner 602 before reaching the impeller 104. The flow conditioner 602 may assist with directing the incoming airflow in the guided direction 604.

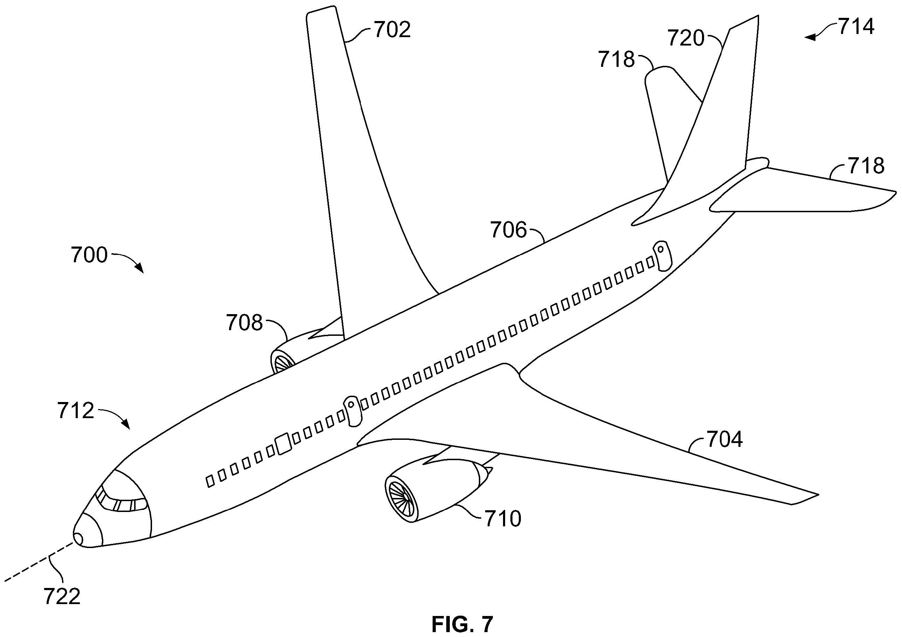

Figure 7 is a perspective illustration of an aircraft 700. In an embodiment, the aircraft 700 represents the vehicle on which the fan installation assembly 202 is installed. The aircraft 700 includes a fuselage 706 extending from a nose section 712 to an empennage 714 or tail section. The aircraft 700 includes a pair of wings 702, 704 extending from the fuselage 706. The wings 702, 704 may include movable wing surfaces, such as ailerons, flaps, and/or spoilers. One or more propulsion systems 708, 710 propel the aircraft 700. The propulsion systems 708, 710 are supported by the wings 702, 704 in the illustrated embodiment, but may be mounted to the fuselage 706 or empennage 714 in other types of aircraft. The empennage 714 may include horizontal stabilizers 716, 718 and a vertical stabilizer 720. The fuselage 706 may define multiple internal cabins along the length of the fuselage 706 from the nose section 712 to the empennage 714. The fuselage 706 is oriented about a longitudinal axis 722. In an embodiment, the fan installation assembly 202 may be part of an air conditioning system (e.g., an environmental control system) onboard the aircraft 700 for regulating the temperature, humidity, and pressure of air supplied into the internal cabins of the fuselage 706.

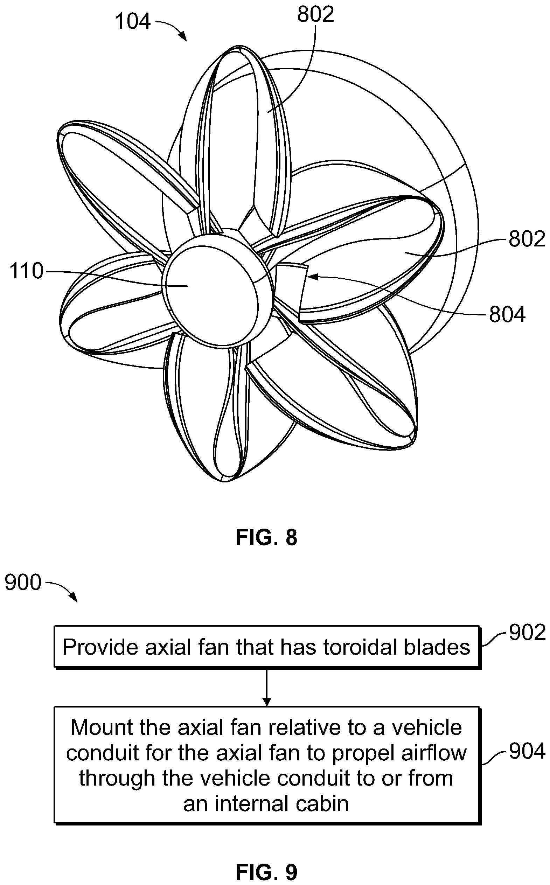

Figure 8 is a perspective view of the impeller 104 of the fan installation assembly 202 according to another embodiment. The impeller 104 in Figure 8 has blades 802 that intersect. For example, the blades 802 have toroidal shapes that define loops extending from the hub 110, similar to the blades 112 shown in Figure 3 and 4. The adjacent blades 112 in Figures 3 and 4 are spaced apart from one another and are separately mounted to the hub 110. In Figure 8, the adjacent blades 802 intersect with one another proximate to the hub 110. For example, a first airfoil section of each blade 802 may define a slot 804 that receives a second airfoil section of the adjacent blade 802 therethrough. This overlapping design may enable a compressed axial fan with a reduced axial length of the impeller 104 along the hub axis 114. The overlapping design may have a reduced efficiency than the design shown in Figures 3 and 4 with separated blades 112.

Figure 9 is a flow chart 900 of a method of assembling a fan installation assembly according to an embodiment. The fan installation assembly may be the fan installation assembly 202 described herein. The method optionally may include additional steps, fewer steps, and/or different steps than the steps shown in the flow chart 900, and/or one or more of the steps may be performed in a different sequence than illustrated and described herein.

At step 902, an axial fan assembly 100 is provided that includes a case 102, a motor assembly 106, and an impeller 104. The case 102 surrounds the impeller 104 and the motor assembly 106. The impeller 104 includes a hub 110 and multiple blades 112 mounted on the hub 110. Each of the blades 112 has a toroidal shape that forms a loop. In an example, the case 102 defines an annular relief channel 504. The annular relief channel 504 may receive captured flow of the airflow propelled by the axial fan assembly 100. In an example, the impeller 104 is positioned relative to the case 102 so that the annular relief channel 504 aligns with the blades 112.

At step 904, the axial fan assembly 100 is mounted relative to a conduit 204 disposed onboard a vehicle 200 for the axial fan assembly 100 to propel airflow through the conduit 204. The airflow in the conduit 204 may be supplied to or received from an internal cabin 206 of the vehicle 200. In an example, the vehicle 200 may be an aircraft 700. The axial fan assembly 100 may be mounted within the conduit 204, coupled to an end of the conduit 204 inline with the conduit 204, or coupled inline between two sections of the conduit 204.

In an example, the method may include providing a flow conditioner 602 in the case 102 upstream of the impeller 104 according to a guided direction of the airflow 604 through the conduit 204. In an example, the method may include providing straightening vanes 508 mounted to a housing 510 of the motor assembly 106 of the axial fan assembly 100. The straightening vanes 508 may be circumferentially spaced apart along a perimeter of the housing 510.

Further, the disclosure comprises examples according to the following clauses:
Clause 1. A fan installation assembly comprising:
   a conduit disposed onboard a vehicle and configured to contain airflow that is supplied to or received from an internal cabin of the vehicle; and
   an axial fan assembly configured to propel the airflow through the conduit, wherein the axial fan assembly comprises a case, a motor assembly, and an impeller, wherein the case surrounds the impeller and the motor assembly and is mounted to the conduit, wherein the impeller includes a hub and multiple blades mounted on the hub, and wherein each of the blades has a toroidal shape that forms a loop.
Clause 2. The fan installation assembly of Clause 1, wherein each of the blades includes a first airfoil section mounted to the hub, a second airfoil section mounted to the hub, and a tip section that connects the first and second airfoil sections, and wherein the first airfoil section, the second airfoil section, and the tip section define the loop.
Clause 3. The fan installation assembly of Clause 2, wherein the first airfoil sections of the blades connect to the hub at respective first locations and the second airfoil sections of the blades connect to the hub at respective second locations, and wherein the first locations are between a tip of the hub and the second locations along a hub axis of the hub.
Clause 4. The fan installation assembly of Clause 2, wherein each of the blades has a monolithic body that includes a first side and a second side opposite the first side, and wherein the monolithic body is twisted along a length of the monolithic body.
Clause 5. The fan installation assembly of any of Clauses 1-4, wherein the hub has a narrow portion and a broad portion extending from the narrow portion, and wherein the blades are mounted to the narrow portion and the motor assembly is mounted to the broad portion.
Clause 6. The fan installation assembly of Clause 5, wherein the narrow portion of the hub has a cylindrical shape and the broad portion of the hub has a conical shape.
Clause 7. The fan installation assembly of any of Clauses 1-6, wherein the impeller and the motor assembly are disposed within a cavity of the case, wherein the cavity is fluidly connected to an internal volume of the conduit, and wherein the case defines an annular relief channel configured to receive captured flow of the airflow.
Clause 8. The fan installation assembly of Clause 7, wherein the annular relief channel aligns with the blades of the impeller.
Clause 9. The fan installation assembly of Clause 7, wherein a diameter of the impeller is at least 75% of a diameter of the cavity of the case at a segment of the cavity next to the annular relief channel.
Clause 10. The fan installation assembly of any of Clauses 1-9, further comprising a flow conditioner located upstream of the impeller according to a guided direction of the airflow through the conduit.
Clause 11. The fan installation assembly of any of Clauses 1-10, further comprising straightening vanes mounted to a housing of the motor assembly, wherein the straightening vanes are circumferentially spaced apart along a perimeter of the housing.
Clause 12. The fan installation assembly of any of Clauses 1-11, wherein the vehicle is an aircraft.
Clause 13. An aircraft comprising:
   an air distribution system including a conduit and an axial fan assembly, wherein the conduit is configured to contain airflow that is supplied to or received from an internal cabin of the aircraft, wherein the axial fan assembly is configured to propel the airflow through the conduit, and wherein the axial fan assembly comprises:
   a motor assembly;
   an impeller including a hub and multiple blades mounted on the hub, wherein each of the blades has a toroidal shape that forms a loop; and
   a case that is mounted to the conduit and surrounds the impeller and the motor assembly.
Clause 14. The aircraft of Clause 13, wherein each of the blades has a monolithic body that includes a first side and a second side opposite the first side, and wherein the monolithic body is twisted along a length of the monolithic body.
Clause 15. The aircraft of Clause 13 or Clause 14, wherein the hub has a narrow portion and a broad portion extending from the narrow portion, wherein the blades are mounted to the narrow portion, and wherein the motor assembly is mounted to the broad portion.
Clause 16. The aircraft of any of Clauses 13-15, wherein the impeller and the motor assembly are mounted within a cavity of the case, wherein the cavity is fluidly connected to an internal volume of the conduit, and wherein the case defines an annular relief channel configured to receive captured flow of the airflow.
Clause 17. The aircraft of any of Clauses 13-16, wherein the air distribution system is part of an air conditioning system of the aircraft, and wherein the air distribution system conveys conditioned air as the airflow to passengers in the internal cabin.
Clause 18. A fan installation assembly comprising:
   a conduit disposed onboard a vehicle and configured to contain airflow that is supplied to or received from an internal cabin of the vehicle; and
   an axial fan assembly configured to propel the airflow through the conduit, wherein the axial fan assembly comprises a case, a motor assembly, and an impeller, wherein the case defines a cavity that is fluidly connected to an internal volume of the conduit, and wherein the impeller and the motor assembly are disposed within the cavity;
   wherein the impeller includes a hub and multiple blades mounted on the hub, wherein each of the blades has a toroidal shape and forms a loop, wherein each of the blades includes a first airfoil section mounted to the hub, a second airfoil section mounted to the hub, and a tip section that connects the first and second airfoil sections; and
   wherein the case defines an annular relief channel configured to receive captured flow of the airflow.
Clause 19. The fan installation assembly of Clause 18, wherein the first airfoil sections of the blades connect to the hub at respective first locations and the second airfoil sections of the blades connect to the hub at respective second locations, and wherein the first locations are between a tip of the hub and the second locations along a hub axis of the hub.
Clause 20. The fan installation assembly of Clause 18 or Clause 19, wherein the annular relief channel aligns with the blades of the impeller.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are example embodiments. Many other embodiments will be apparent to those of ordinary skill in the art upon reviewing the above description. The scope of the various embodiments of the disclosure should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, the terms "first," "second," and "third," etc., are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and may include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A fan installation assembly (202) comprising:
a conduit (204) configured to be disposed onboard a vehicle (200) and configured to contain airflow (604) that is supplied to or received from an internal cabin (206) of the vehicle; and
an axial fan assembly (100) configured to propel the airflow through the conduit, wherein the axial fan assembly comprises a case (102), a motor assembly (106), and an impeller (104), wherein the case surrounds the impeller and the motor assembly and is mounted to the conduit, wherein the impeller includes a hub (110) and multiple blades (112) mounted on the hub, and wherein each of the blades has a toroidal shape that forms a loop.

2. The fan installation assembly (202) of claim 1, wherein each of the blades (112) includes a first airfoil section (116) mounted to the hub (110), a second airfoil section (118) mounted to the hub, and a tip section (120) that connects the first and second airfoil sections, and wherein the first airfoil section, the second airfoil section, and the tip section define the loop.

3. The fan installation assembly (202) of claim 2, wherein the first airfoil sections (116) of the blades (112) connect to the hub (110) at respective first locations (312) and the second airfoil sections (118) of the blades connect to the hub at respective second locations (314), and wherein the first locations are between a tip (316) of the hub and the second locations along a hub axis of the hub.

4. The fan installation assembly (202) of any one of claims 1-3, wherein each of the blades (112) has a monolithic body (302) that includes a first side (308) and a second side (310) opposite the first side, and wherein the monolithic body is twisted along a length of the monolithic body.

5. The fan installation assembly (202) of any one of claims 1-4, wherein the hub (110) has a narrow portion (318) and a broad portion (320) extending from the narrow portion, and wherein the blades (112) are mounted to the narrow portion and the motor assembly (106) is mounted to the broad portion,
optionally, wherein the narrow portion (318) of the hub (110) has a cylindrical shape and the broad portion (320) of the hub has a conical shape.

6. The fan installation assembly (202) of any one of claims 1-5, wherein the impeller (104) and the motor assembly (106) are disposed within a cavity (108) of the case (102), wherein the cavity is fluidly connected to an internal volume (502) of the conduit (204), and wherein the case defines an annular relief channel (504) configured to receive captured flow of the airflow (604),
optionally, wherein the annular relief channel (504) aligns with the blades (112) of the impeller (104).

7. The fan installation assembly (202) of claim 6, wherein a diameter of the impeller (104) is at least 75% of a diameter of the cavity (108) of the case (102) at a segment of the cavity next to the annular relief channel (504).

8. The fan installation assembly (202) of any one of claims 1-7, further comprising a flow conditioner (602) located upstream of the impeller (104) according to a guided direction (604) of the airflow (604) through the conduit (204).

9. The fan installation assembly (202) of any one of claims 1-8, further comprising straightening vanes (508) mounted to a housing (510) of the motor assembly (106), wherein the straightening vanes (508) are circumferentially spaced apart along a perimeter of the housing (510).

10. The fan installation assembly (202) of any one of claims 1-9, wherein the case (102) defines a cavity (108) that is fluidly connected to an internal volume (502) of the conduit (204), and wherein the impeller (104) and the motor assembly (106) are disposed within the cavity (108);
wherein each of the blades includes a first airfoil section (116) mounted to the hub, a second airfoil section (118) mounted to the hub, and a tip section (120) that connects the first and second airfoil sections; and
wherein the case defines an annular relief channel (504) configured to receive captured flow of the airflow.

11. The fan installation assembly (202) of claim 10, wherein the first airfoil sections (116) of the blades (112) connect to the hub (110) at respective first locations (312) and the second airfoil sections (118) of the blades connect to the hub at respective second locations (314), and wherein the first locations are between a tip (316) of the hub and the second locations along a hub axis of the hub.

12. The fan installation assembly (202) of claim 10, wherein the annular relief channel (504) aligns with the blades (112) of the impeller (104).

13. The fan installation assembly (202) of any one of claims 1-12, wherein the vehicle (200) is an aircraft (700).

14. An aircraft (700) comprising:
an air distribution system (210) into which at least one fan installation assembly (202) of any one of claims 1-12 is incorporated, each fan installation assembly (202) including a conduit (204) and an axial fan assembly (100), wherein the conduit (204) is configured to contain airflow (604) that is supplied to or received from an internal cabin (206) of the aircraft, wherein the axial fan assembly is configured to propel the airflow through the conduit, and wherein the axial fan assembly comprises:
a motor assembly (106);
an impeller (104) including a hub (110) and multiple blades (112) mounted on the hub, wherein each of the blades has a toroidal shape that forms a loop; and
a case (102) that is mounted to the conduit and surrounds the impeller and the motor assembly.

15. The aircraft (700) of claim 14, wherein the air distribution system (210) is part of an air conditioning system of the aircraft, and wherein the air distribution system conveys conditioned air as the airflow (604) to passengers in the internal cabin (206).
